# EUROPEAN PATENT APPLICATION

(11) **EP 4 064 401 A2**
(43) Date of publication of application: **28.09.2022**
(21) Application number: 22162594.0
(22) Date of filing: 16.03.2022
(51) Int. Cl.: H01M 10/04, H01M 10/0525, H01M 50/528, H01M 50/531, H01M 50/533, H01M 50/538, H01M 50/566

(54) **BATTERY CELL AND ELECTRIC APPARATUS**

(30) Priority: 26.03.2021 CN 202110328266
(71) Applicant: Ningde Amperex Technology Ltd., Ningde City, Fujian 352100 (CN)
(72) Inventor: WANG, Kun, Ningde, 352100 (CN); DAI, Zhifang, Ningde, 352100 (CN)
(74) Representative: Icosa

(57) **Abstract**

A battery cell (1) includes an electrode assembly (200) wound to form an in-cell space (201) and a first tab (300). The electrode assembly (200) includes a first electrode plate (210) wound to form a plurality of first flat portions (211) extending straight. Along a direction perpendicular to the plurality of first flat portions (211), all the first flat portions (211) are located at a same side of the in-cell space (201) surrounded by the electrode assembly (200). The first tab (300) includes a first connection portion (310) connected to at least two of the plurality of first plat portions (211) and a first extension portion (320) including a first extension segment (321) arranged obliquely relative to an end face of the electrode assembly (200). A first end (3211) of the first extension segment (321) is connected to the first connection portion (310), and the first extension segment (321) gradually approaches the electrode assembly (200) from the first end (3211) to a second end (3212) of the first extension segment (321).

## Description

### TECHNICAL FIELD

Embodiments of this application relate to the technical field of batteries, and in particular, to a battery cell and an electric apparatus.

### BACKGROUND

A battery cell is an apparatus that converts external energy into electric energy and stores the electric energy inside to supply power to a peripheral (such as a portable electronic device) when needed. Currently, battery cells are widely applied to electronic products such as mobile phones, tablet computers, and notebook computers. Generally, the battery cell includes a housing, an electrode assembly accommodated in the housing, and a tab connected to the electrode assembly and partially extending out of the housing. Specifically, the electrode assembly typically includes a positive electrode plate, a negative electrode plate, and a separator located there between. The positive electrode plate, the negative electrode plate, and the separator are stacked and jointly wound into a cylindrical structure with an elliptical cross-section. Each electrode plate (the positive electrode plate or negative electrode plate) is wound to form a plurality of flat portions extending straight, and a plurality of extending curved portions that connect two adjacent of the plurality of flat portions. An end of the tab is connected to the electrode plate, and an other end of the tab extends out of the housing.

In recent years, a multi-tab unit solution has been applied to some battery cells on the market, to reduce internal resistance of the battery cells during operation. Specifically, at least two of the plurality of flat portions of an electrode plate separately extend out of tab units, and the tab units converge close to the outermost flat portion, and are then stacked together and extend toward the other outermost flat portion.

However, in the condition of equal battery cell capacity, such battery cell occupies a larger volume than a common battery cell, thereby causing lower energy density.

### SUMMARY

Embodiments of this application aim to provide a battery cell and an electric apparatus, to optimize a current case that an existing battery cell still has a relatively large volume occupied and low energy density.

To resolve the technical problem, the following technical solutions are used in the embodiments of this application:

A battery cell includes an electrode assembly and a first tab; where the electrode assembly is wound to form an in-cell space at the center, the electrode assembly includes a first electrode plate, a second electrode plate, and a separator, the first electrode plate and the second electrode plate are spaced apart, and the separator is arranged between the first electrode plate and the second electrode plate; the first electrode plate is wound to form a plurality of first flat portions extending straight, and along a direction perpendicular to the plurality of first flat portions, the plurality of first flat portions are located at a same side of the in-cell space surrounded by the electrode assembly; the first tab includes a first connection portion and a first extension portion connected to the first connection; the first connection portion is connected to at least two of the plurality of first flat portions; and the first extension portion includes a first extension segment, the first extension segment is arranged obliquely relative to an end face of the electrode assembly, a first end of the first extension segment is connected to the first connection portion, and the first extension segment gradually approaches the electrode assembly from the first end to a second end of the first extension segment.

In some embodiments, the first extension portion further includes a second extension segment; and the second extension segment is connected to the second end and is located on a side of the first extension segment extending away from the electrode assembly, and an end of the second extension segment extending away from the first extension segment extends in a direction approaching the first connection portion.

In some embodiments, the second extension segment includes a first part and a second part connected to the first part; an end of the first part is connected to the first extension segment, and an other end of the first part extends in a direction facing away from the electrode assembly; and an end of the second part is connected to the first part, and an other end of the second extends in a direction approaching the first connection portion.

In some embodiments, a distance between the first extension segment and the second part gradually decreases from the second end to the first end.

In some embodiments, the second part is perpendicular to an extension direction of the in-cell space.

In some embodiments, a plane determined based on an extension track of the first extension portion is perpendicular to the first flat portions from the first end to an end of the second extension segment extending away from the first extension segment.

In some embodiments, the first tab includes a plurality of first tab units, each of the plurality of first tab units is corresponding to one of the plurality of first flat portions, and each of the plurality of first tab units includes a first connection plate and a first extension plate; an end of each of the first connection plates is connected to one of the plurality of first flat portions, and other ends of all the first connection plates converge; the first extension plate is connected to an end of the first connection plate extending away from the plurality of first flat portions, where all the first extension plates are stacked; and the first connection portion includes all the first connection plates, and the extension portion includes all the first extension plates stacked.

In some embodiments, the first electrode plate is wound to form the plurality of first flat portions extending straight and a plurality of second flat portions extending straight; and along the direction perpendicular to the plurality of first flat portions, the plurality of second flat portions are located on one side of the in-cell space and the plurality of first flat portions are located on another side of the in-cell space; and the first tab further includes a second tab unit, and the second tab unit includes a second connection plate and a second extension plate; an end of the second connection plate is connected to one of the plurality of second flat portions; and the second extension plate is connected to an end of the second connection plate extending away from the plurality of second flat portions, where the second extension plate and the first extension plate are stacked; and the first connection portion includes all the first connection plates, and the extension portion includes all the first extension plates and the second extension plate stacked.

In some embodiments, the second connection plate is connected to an outermost second flat portion.

In some embodiments, the first tab unit and the first flat portion are integrally formed; and/or the second tab unit and one of the plurality of second flat portions are integrally formed.

In some embodiments, the battery cell further includes a housing and a first adapting tab, where the electrode assembly and the first tab are both accommodated in the housing; and an end of the first adapting tab is connected to the first extension portion, and an other end of the first adapting tab extends out of the housing.

In some embodiments, the first adapting tab includes a first fastening portion and a first bent portion connected to the first fastening portion; the first fastening portion is welded to a side of the second extension segment facing toward the electrode assembly to form a welding mark; and the first bent portion is bent relative to the first fastening portion and partially extends out of the housing.

In some embodiments, the battery cell further includes a first protective film layer; and a part of the first protective film layer is fastened to the electrode assembly, another part of the first protective film layer is fastened to the first tab, and the first protective film layer covers at least a part of the welding mark.

In some embodiments, the second electrode plate is wound to form a plurality of third flat portions extending straight, the plurality of third flat portions and the plurality of first flat portions are both located at a same side of the in-cell space and arranged alternately along a direction perpendicular to the plurality of first flat portions, the battery cell further includes a second tab, and the second tab includes a second connection portion and a second extension portion connected to the second connection portion; the second connection portion is connected to at least two of the plurality of third flat portions; the second extension portion includes a third extension segment, the third extension segment is arranged obliquely relative to an end face of the electrode assembly, a first end portion of the third extension segment is connected to the second connection portion, and the third extension segment gradually approaches the electrode assembly from the first end portion to a second end portion of the third extension segment; and the second extension portion further includes a fourth extension segment, the fourth extension segment is connected to the second end portion and is located on a side of the third extension segment extending away from the electrode assembly, and an end of the fourth extension segment extending away from the third extension segment extends in a direction approaching the second connection portion.

In some embodiments, the second tab and the first tab are arranged in parallel.

To resolve the technical problem, the following technical solutions are also used in the embodiments of this application:

An electric apparatus includes the battery cell in any one of the foregoing solutions.

Beneficial effects of this application are as follows:
The battery cell currently available on the market adopts a plurality of tab units. At least two of the plurality of flat portions of electrode plates of the battery cell on both sides of the in-cell space of the electrode assembly extend out of the plurality of tab units; and the plurality of tab units converge close to an outermost flat portion, are then stacked together and bent farther away from the electrode assembly, and extend toward the other outermost flat portion. In such structure design, parts of the plurality of tab units between the corresponding one of the plurality of flat portions and the most downstream convergence point of the tab units jointly form a connection portion, and parts of the converged tab units that are bent farther away from the electrode assembly form an extension portion. To avoid excessive concentration of stress at a joint between the connection portion and the extension portion, a transitional portion between the connection portion and the extension portion is arc-shaped. In addition, to reduce the overall volume of the battery cell, the end of the extension portion extending away from the connection portion extends toward the electrode assembly, such that a portion of the battery cell corresponding to the joint bulges outward. As a result, the occupied volume of the battery cell is still relatively large, and the energy density of the battery cell is relatively low.

Compared with the existing battery cell on the market, in the battery cell provided in the embodiments of this application, the first tab and at least two of the plurality of first flat portions located at the same side of the in-cell space of the electrode assembly are separately connected and converge through the first connection portion. The end of the first extension segment of the first extension portion extending away from the first connection portion is set tilted in a direction approaching the electrode assembly, to effectively reduce the bulge height of the first extension portion. In other words, in the condition of equal battery cell capacity, the battery cell provided in the embodiments of this application can reduce the occupied volume by using the foregoing method, thereby optimizing a current case that an occupied volume of the battery cell is relatively large, to improve the energy density of the battery cell. In the condition of equal battery cell volume, the battery cell provided in the embodiments of this application allows for a larger electrode assembly by utilizing the space saved in the foregoing method, thereby implementing greater battery cell capacity and improving the energy density of the battery cell.

### BRIEF DESCRIPTION OF DRAWINGS

One or more embodiments are used as examples for description by using corresponding accompanying drawings. These example descriptions impose no limitation on the embodiments. Elements with a same reference sign in the accompanying drawings represent similar elements. Unless otherwise stated, the figures in the accompanying drawings impose no limitation on a scale.
FIG. 1 is a schematic diagram of a battery cell according to an embodiment of this application;
FIG. 2 is a schematic diagram of the battery cell in FIG. 1 with a housing omitted;
FIG. 3 is a schematic cross-sectional view of FIG. 2 along a line A-A;
FIG. 4 is a partial schematic cross-sectional view of FIG. 2 along a line B-B;
FIG. 5 is a schematic cross-sectional view of a first tab unit in FIG. 4;
FIG. 6 is a partial schematic cross-sectional view of FIG. 2 along a line C-C;
FIG. 7 is a schematic cross-sectional view of a third tab unit in FIG. 6; and
FIG. 8 is a schematic diagram of an electric apparatus according to an embodiment of this application.

### DESCRIPTION OF EMBODIMENTS

For ease of understanding of this application, the following describes this application more specifically with reference to the accompanying drawings and specific embodiments. It should be noted that when an element is "fastened to/fixed to/installed on" another element, the element may be directly on the another element, or there may be one or more sandwiched elements between the elements. When an element is "connected to" another element, the element may be directly linked to the another element, or there may be one or more sandwiched elements between the elements. Terms such as "vertical", "horizontal", "left", "right", "inner", "outer" and similar expressions used in this specification are only for description purposes.

Unless otherwise defined, all technical and scientific terms used in this specification shall have the same meanings as commonly understood by persons skilled in the art to which this application pertains. The terms used in this specification of this application are only used to describe specific embodiments, and are not intended to limit this application. The term "and/or" used in this specification includes any and all combinations of one or more relevant listed items.

In addition, technical features mentioned in different embodiments of this application described below may be jointly combined, provided that they do not conflict with one another.

In this specification, "installation" includes manners such as welding, screwing, clamping, and adhesion in terms of fastening or confining a specific element or apparatus to a specific location or place. The element or apparatus may remain stationary in the specific location or place, or may move within a limited range. The element or apparatus may or may not be detached after being fastened or confined to the specific location or place. This is not limited in the embodiments of this application.

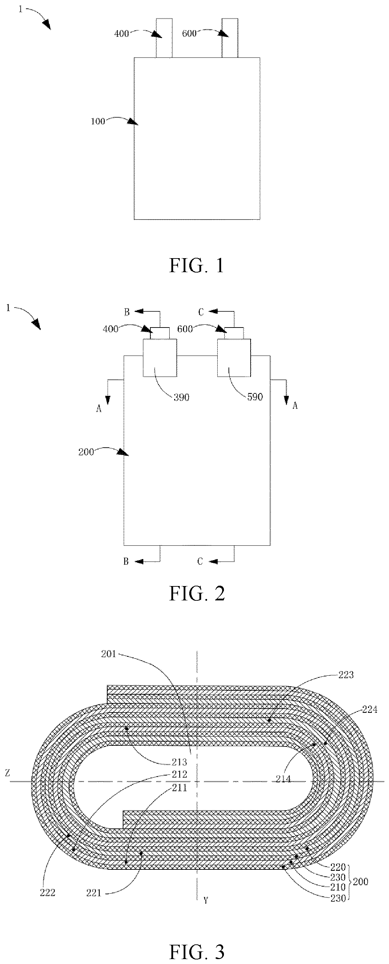

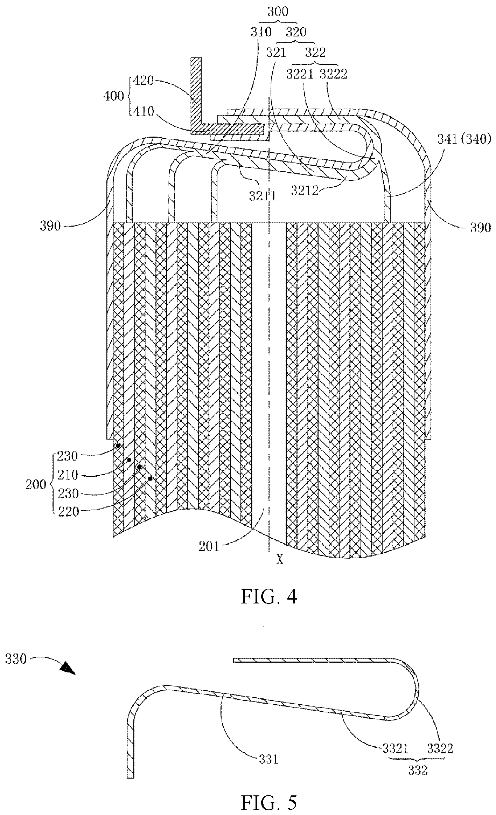

FIG. 1 is a schematic diagram of a battery cell 1 according to an embodiment of this application. FIG. 2 is a schematic diagram of the battery cell 1 with a housing omitted. FIG. 3 is a schematic cross-sectional view of the battery cell 1 with a housing omitted along a shown line A-A. FIG. 4 is a partial schematic cross-sectional view of the battery cell 1 with a housing omitted along a shown line B-B. The battery cell 1 includes a housing 100, an electrode assembly 200, a first tab 300, and a first adapting tab 400. The housing 100 is a structure for installing the foregoing structures. The electrode assembly 200 is accommodated in the housing 100 and is wound to form an in-cell space 201 at a center. The electrode assembly 200 specifically includes a first electrode plate 210, a second electrode plate 220, and a separator 230. The first electrode plate 210 and the second electrode plate 220 are spaced apart, and the separator 230 is arranged between the first electrode plate 210 and the second electrode plate 220. The first electrode plate 210 is wound to form a plurality of first flat portions 211 extending straight, and along a direction perpendicular to the plurality of first flat portions 211, all the plurality of first flat portions 211 are located at a same side of the in-cell space 201 surrounded by the electrode assembly 200. The first tab 300 includes a first connection portion 310 and a first extension portion 320 connected to the first connection portion 310. The first connection portion 310 is connected to at least two of the plurality of first flat portions 211; and the first extension portion 320 includes a first extension segment 321, the first extension segment 321 is arranged obliquely relative to an end portion of the electrode assembly 200, a first end 3211 of the first extension segment 321 is connected to the first connection portion 310, and the first extension segment 321 gradually approaches the electrode assembly 200 from the first end 3211 to a second end 3212 of the first extension segment 321.

For the housing 100, referring to FIG. 1, the housing 100 is a flat cuboid as a whole, and is provided with an accommodation chamber (not shown in the figure) inside. The accommodation chamber is configured to accommodate the electrode assembly 200, the first tab 300, and an electrolyte. In this embodiment, the battery cell 1 is a soft-pack battery cell, and the housing 100 is an aluminum-plastic film. It may be understood that, in another embodiment of this application, the battery cell 1 may alternatively be a hard-shell battery cell, and correspondingly, the housing 100 is a metal shell.

For the electrode assembly 200, refer to FIG. 3 and FIG. 4, combined with other figures. The electrode assembly 200 is accommodated in the accommodation chamber, and includes the first electrode plate 210 and the second electrode plate 220 that are spaced apart, and a separator 230 that is arranged between the first electrode plate 210 and the second electrode plate 220 for separating them. The first electrode plate 210 and the second electrode plate 220 have opposite polarities. One of the first electrode plate 210 and the second electrode plate 220 is a positive electrode plate and the other is a negative electrode plate. The first electrode plate 210, the second electrode plate 220, and the separator 230 are stacked and wound into a cylindrical structure with an elliptical cross-section, to be accommodated in the accommodation chamber. The electrode assembly 200 is wound to form, at the center, the in-cell space 201 extending along a first direction X shown in the figure. Two ends of the in-cell space 201 are provided with openings. The first electrode plate 210, the second electrode plate 220, and the separator 230 are all arranged around the in-cell space 201. In a winding process of the electrode assembly 200, the first electrode plate 210, second electrode plate 220, and separator 230 that are stacked are wound around an outer surface of a winding pin (not shown in the figure) extending along the first direction X; and after the winding process is completed, the winding pin is retracted, so that the electrode assembly 200 are wound into the foregoing shape and the in-cell space 201 is formed in a central portion of the electrode assembly 200. In other words, a virtual winding face extending along the first direction X is formed at a boundary of the in-cell space 201, and the first electrode plate 210, the second electrode plate 220, and the separator 230 are all arranged around the winding face. It should be understood that even though an example in which the electrode assembly 200 is a cylindrical structure with an elliptical cross-section is used for description in this embodiment, considering that the electrode assembly 200 can be wound in various forms and the electrode assembly 200 is prone to deform during use of the battery cell 1, the shape of the electrode assembly is not specifically limited in this application. The following describes specific structures of the first electrode plate 210 and the second electrode plate 220.

For the first electrode plate 210, refer to FIG. 3 and other figures. The first electrode plate 210 is wound, to form a plurality of first flat portions 211 extending straight, a plurality of first curved portions 212 extending curvedly, a plurality of second flat portions 213 extending straight, and a plurality of second curved portions 214 extending curvedly. The plurality of first flat portions 211 and the plurality of second flat portions 213 are arranged opposite each other along a second direction Y; and along the second direction Y, the plurality of first flat portions 211 are located at a same side of the in-cell space 201, the plurality of second flat portions 213 are located at a same side of the in-cell space 201, and the plurality of second flat portions 213 and the plurality of first flat portions 211 are respectively located on different sides of the in-cell space 201. Likewise, the plurality of first curved portions 212 and the plurality of second curved portions 214 are arranged opposite each other along a third direction Z; and along the third direction Z, the plurality of first curved portions 212 are located at a same side of the in-cell space 201, the plurality of second curved portions 214 are located at a same side of the in-cell space 201, and the plurality of second curved portions 214 and the plurality of first curved portions 212 are respectively located on different sides of the in-cell space 201. One of the plurality of first flat portions 211, one of the plurality of first curved portions 212, one of the plurality of second flat portions 213, and one of the plurality of second curved portions 214 are sequentially connected, to form a single-loop structure, and a plurality of single-loop structures are sequentially connected from the inside out and extend approximately in a spiral form. It should be noted that the "second direction Y" mentioned in this application is a direction perpendicular to the plurality of first flat portions 211, and is also a direction perpendicular to the plurality of second flat portions 213 in this embodiment. Certainly, in other embodiments of this application, there may be a relatively small included angle between the plurality of second flat portions 213 and the plurality of first flat portions 211, and in this case, the second direction Y is not perpendicular to the plurality of second flat portions 213. The "third direction Z" mentioned in this application is a direction in which an end of one of the plurality of first flat portions 211 closer to the plurality of first curved portions 212 points to an end of the one of the plurality of first flat portions 211 closer to the plurality of second curved portions 214, or a direction in which an end of one of the plurality of first flat portions 211 closer to the plurality of second curved portions 214 points to an end of the one of the plurality of first flat portions 211 closer to the plurality of first curved portions 212. In this embodiment, any two of the first direction X, the second direction Y, and the third direction Z are perpendicular to each other.

For the second electrode plate 220, still refer to FIG. 3 and also refer to other drawings. Likewise, the second electrode plate 220 is wound, to form a plurality of third flat portions 221 extending straight, a plurality of third curved portions 222 extending curvedly, a plurality of fourth flat portions 223 extending straight, and a plurality of fourth curved portions 224 extending curvedly. The plurality of third flat portions 221 and the plurality of fourth flat portions 223 are arranged opposite each other along a shown second direction Y; and along the second direction Y, the plurality of third flat portions 221 are located at a same side of the in-cell space 201, the plurality of fourth flat portions 223 are located at a same side of the in-cell space 201, and the plurality of fourth flat portions 223 and the plurality of third flat portions 221 are respectively located on different sides of the in-cell space 201. Likewise, the plurality of third curved portions 222 and the plurality of fourth curved portions 224 are arranged opposite each other along a third direction Z; and along the third direction Z, the third plurality of curved portions 222 are located at a same side of the in-cell space 201, the plurality of fourth curved portions 224 are located at a same side of the in-cell space 201, and the plurality of fourth curved portions 224 and the plurality of third curved portions 222 are respectively located on different sides of the in-cell space 201. One of the plurality of third flat portions 221, one of the third plurality of curved portions 222, one of the plurality of fourth flat portions 223, and one of the plurality of fourth curved portions 224 are sequentially connected, to form a single-loop structure, and a plurality of single-loop structures are sequentially connected from the inside out and extend approximately in a spiral form. In this embodiment, the plurality of third flat portions 221 and the plurality of first flat portions 211 are located at the same side of the in-cell space 201 and arranged alternately, and are spaced apart by the separator 230; and correspondingly, the plurality of fourth flat portions 223 and the plurality of second flat portions 213 are located at the same side of the cell in-space 201 and arranged alternately, and are spaced apart by the separator 230.

In addition, the housing 100 is provided with electrolyte, and the electrode assembly 200 is immersed in the electrolyte. The electrolyte is used to provide an environment for conducting lithium ions, so that the lithium ions can be properly intercalated into the first electrode plate 210 or the second electrode plate 220, to implement charging and discharging processes of the battery cell 1.

For the first tab 300, refer to FIG. 4 and other figures. The first tab 300 is located at an end portion of the electrode assembly 200 in the first direction X, and includes the first connection portion 310 and the first extension portion 320 connected to the first connection portion 310. The first connection portion 310 is accommodated inside the housing 100 and is connected to at least two of the plurality of first flat portions 211. The first extension portion 320 includes a first extension segment 321 and a second extension segment 322. The first extension segment 321 is arranged obliquely relative to an end of the electrode assembly 200, a first end 3211 is connected to the first connection portion 310, and a second end 3212 extends in a direction leaving the first connection portion 310; and the first extension segment 321 gradually approaches the electrode assembly 200 from the first end 3211 to the second end 3212. The second extension segment 322 is connected to the second end 3212 of the first extension segment 321 and is located on a side of the first extension segment 321 extending away from the electrode assembly 200. An end of the second extension segment 322 extending away from the first extension segment 321 extends in a direction approaching the first connection portion 310, that is, from the first end 3211 to the end of the second extension segment 322 extending away from the first extension segment 321, extension directions of the first extension segment 321 and the second extension segment 322 are opposite.

In some embodiments, the second extension segment 322 includes a first part 3221 and a second part 3222 connected to the first part 3221. The first part 3221 extends to form an arc shape, an end of the first part 3221 is connected to the second end 3212 of the first extension segment 321, and an other end of the first part 3221 extends in a direction leaving the electrode assembly 200. The first part 3221 is arranged to optimize a sharp connection between the first extension segment 321 and the second part 3222, which would otherwise cause a disadvantage of excessive stress at a joint between the first extension segment 321 and the second extension segment 322. The second part 3222 extends straight, an end of the second part 3222 is connected to the first part 3221, and an other end of the second part 3222 extends in a direction approaching the first connection portion 310. It should be noted that an end of the first extension segment 321 extending away from the first connection portion 310 is arranged obliquely close to the electrode assembly 200, so that a joint between the first extension segment 321 and the second extension segment 322 can be pushed down toward the electrode assembly 200, to further reduce a bulge height of the joint, thereby helping optimize a current case that an overall occupied volume of the battery cell is relatively large.

In some embodiments, a distance between the first extension segment 321 and the second part 3222 gradually decreases from the second end 3212 to the first end 3211 of the first extension segment 321. In this way, an overall bulge height of the first tab 300 can be reduced, thereby increasing overall energy density of the battery cell 1. In some embodiments, the second part 3222 extends in a direction perpendicular to the first direction X. In this way, the second part 3222 can be parallel to an end portion of the electrode assembly 200, to facilitate overall packaging of the battery cell 1. From the first end 3211 of the first extension segment 321 to an end of the second extension segment 322 extending away from the first extension segment 321, a plane determined based on an extension track of the first extension portion 320 is perpendicular to the first flat portion 211, that is, the second part 3222 extends along the second direction Y.

In some embodiment, the first tab 300 includes a plurality of first tab units 330. FIG. 5 is a schematic cross-sectional view of a first tab unit 330. Further referring to other figures, the plurality of first tab units 330 are located at a same side of the electrode assembly 200. In some embodiments, along the first direction X, the plurality of first tab units 330 are located at an upper end of the electrode assembly 200 shown in the figure. Each of the plurality of first tab units 330 is corresponding to one of the plurality of first flat portions 211, an end of each of the plurality of first tab units 330 is connected to the corresponding one of the plurality of first flat portions 211, and an other end each of the plurality of first tab units 330 extends away from the first electrode plate 210; and ends of all the plurality of first tab units 330 extending away from the first electrode plate 210 are stacked and fastened. In some embodiments, each of the plurality of first tab units 330 includes a first connection plate 331 and a first extension plate 332 connected to the first connection plate 331. The first connection plate 331 is L-shaped, a part of the first connection plate 331 is connected to the first flat portion 211, and another part is bent relative to the foregoing part, and gradually approaches the electrode assembly 200. Ends of all the first connection plates 331 extending away from the electrode assembly 200 converge. The first extension plate 332 is U-shaped. An end of a first region segment 3321 of the first extension plate 332 is connected to an end of the first connection plate 331 extending away from the first flat portion 211, and an other end of the first region segment 3321 extends away from the first connection plate 331, and gradually approaches the electrode assembly 200. An end of a second region segment 3322 of the second extension plate is connected to the first region segment 3321, and an other end of the second region segment 3322 is bent in a direction leaving the electrode assembly 200. An extension direction of the first region segment 3321 and an extension direction of the second region segment 3322 are opposite along an extension path of the first tab unit 330, that is, as shown in FIG. 5, the first region segment 3321 extends toward the right side, and the second region segment 3322 extends away from the electrode assembly 200 and toward the left side. All the first extension plates are stacked and fastened. The first connection portion 310 includes all the first connection plates 331, and the first extension portion 320 includes all the first extension plates 332 stacked.

In some embodiments, each of the plurality of first tab units 330 and each of the plurality of first flat portions 211 are integrally formed. In some embodiments, each of the plurality of first tab units 330 extends outward from a current collector of one of the plurality of first flat portions 211, and is die-cut integrated by a device during the current collector fabrication.

Further, because the first extension portion 320 is in a free floating state, the electrode assembly 200 with the first tab 300 connected may not fit into the housing 100. To improve such shortcoming, the battery cell 1 further includes a second tab unit 340. In some embodiments, still referring to FIG. 4 and other figures, the second tab unit 340 includes a second connection plate 341 and a second extension plate (not shown in the figure) that are integrally formed and mutually connected. An end of the second connection plate 341 is connected to one of the plurality of second flat portions 213, and an other end of the second connection plate 341 extends toward the first part 3221. The second extension plate and the first extension plate 332 are stacked and fastened; and an end of the second extension plate is located at the first part 3221 and is connected to an end of the second connection plate 341 extending away from the plurality of second flat portions 213. The first connection portion 310 includes the first connection plates 331, and the first extension portion 320 includes all the first extension plates 332 and the second extension plate that are stacked. In this case, the second connection plate 341 can form a structure for supporting the first extension portion 320 to limit free movement of the first extension portion 320. In some embodiments, the second connection plate 341 is connected to an outermost second flat portion 213, that is, one of the plurality of second flat portions 213 farthest from the plurality of first flat portions 211. Considering that internal resistance may be well reduced by separately connecting the first tab 300 to the plurality of first flat portions 211, only one second tab unit 340 is arranged. In addition, arranging the second tab unit 340 on the outermost side helps to hinder the first extension segment 321 from protruding from the second connection plate 341, thereby preventing the first extension portion 320 from being partially hung in the air.

For the first adapting tab 400, refer to FIG. 4 and other figures. An end of the first adapting tab 400 is connected to the first extension portion 320, and an other end of the first adapting tab 400 extends out of the housing 100. Specifically, the first adapting tab 400 is L-shaped and includes a first fastening portion 410 and a first bent portion 420 connected to the first fastening portion 410. The first fastening portion 410 is provided on a side of the second part 3222 facing the electrode assembly 200. The first fastening portion 410 and the second part 3222 are welded, and a welding mark is formed at a welding position. The first bent portion 420 is bent relative to the first fastening portion 410, and an end of the first bent portion 420 extending away from the first fastening portion 410 extends out of the housing 100 to be electrically connected to an external electric component.

Further, to hinder the welding mark formed by the first tab 300 and the first adapting tab 400 from piercing the housing 100, the battery cell 1 further includes a first protective film layer 390. In some embodiments, referring to FIG. 2 and FIG. 4, a part of the first protective film layer 390 is fastened to the electrode assembly 200, another part is fastened to the first tab 300, and the first protective film layer 390 covers at least a part of the welding mark. In some embodiments, the first protective film layer 390 is adhesive tape. It may be understood that in another embodiment of this application, the first protective film layer 390 may alternatively be any other structure with an insulation property, such as plastic or rubber. Details are listed one by one herein. In some embodiments, to fully cover the welding mark of the first tab 300, the first tab 300 is corresponding to two first protective film layers 390. In some embodiments, the two first protective film layers 390 are respectively connected to two opposite surfaces of the electrode assembly 200 along the second direction Y, and the two first protective film layers 390 jointly cover the welding mark.

In addition, the battery cell 1 further includes a second tab 500 and a second adapting tab 600. In this embodiment, a structure of the second tab 500 is approximately consistent with that of the first tab 300, and a structure of the second adapting tab 600 is approximately consistent with that of the first adapting tab 400. The following sequentially describes the second tab 500 and the second adapting tab 600.

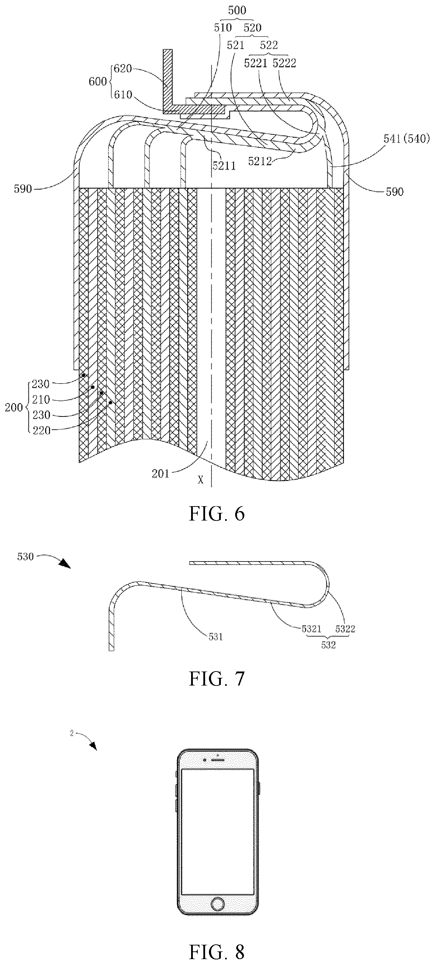

For the second tab 500, refer to FIG. 6 and other figures. FIG. 6 is a partial schematic cross-sectional view of FIG. 2 along a line C-C. Similar to the first tab 300, the second tab 500 and the first tab 300 are located at a same end portion of the electrode assembly 200 along the first direction X, and the second tab 500 includes a second connection portion 510 and a second extension portion 520 connected to the second connection 510. The second connection portion 510 is accommodated inside the housing 100 and is connected to at least two of a plurality of the third flat portions 221. The second extension portion 520 includes a third extension segment 521 and a fourth extension segment 522. The third extension segment 521 is arranged obliquely relative to an end of the electrode assembly 200, a first end portion 5211 is connected to the second connection portion 510, and a second end portion 5212 extends in a direction leaving the second connection portion 510; and the third extension segment 521 gradually approaches the electrode assembly 200 from the first end portion 5211 to the second end portion 5212 of the third extension segment 521. The fourth extension segment 522 is connected to the second end portion 5212 of the third extension segment 521 and is located on a side of the third extension segment 521 extending away from the electrode assembly 200. An end of the fourth extension segment 522 extending away from the third extension segment 521 extends in a direction approaching the second connection portion 510, that is, extension directions of the third extension segment 521 and the fourth extension segment 522 are opposite.

In some embodiments, the fourth extension segment 522 includes a third part 5221 and a fourth part 5222 connected to the third part 5221. The third part 5221 extends in an arc shape, an end of the third part 5221 is connected to the second end portion 5212 of the third extension segment 521, and an other end of the third part 5221 extends in a direction leaving the electrode assembly 200. The third part 5221 is arranged to avoid a sharp connection between the third extension segment 521 and the fourth part 5222, which would otherwise cause a disadvantage of excessive stress at a joint between the third extension segment 521 and the fourth extension segment 522. The fourth part 5222 extends straight, an end of the fourth part 5222 is connected to the third part 5221, and an other end of the fourth part 5222 extends in a direction approaching the second connection portion 510. It should be noted that an end of the third extension segment 521 extending away from the second connection portion 510 is arranged obliquely close to the electrode assembly 200, so that a joint between the third extension segment 521 and the fourth extension segment 522 can be pushed down toward the electrode assembly 200, to further reduce a bulge height of the joint, thereby helping optimize a current case that an overall occupied volume of the battery cell is relatively large. It should be further noted that in this embodiment, the first flat portion 211 and the third flat portion 221 are located at the same side of the in-cell space 201, but this application is not limited thereto. In another embodiment of this application, the first flat portion 211 and the third flat portion 221 may alternatively be respectively located on different sides of the in-cell space 201.

In some embodiments, a distance between the third extension segment 521 and the fourth part 5222 gradually decreases from the second end portion 5212 to the first end portion 5211 of the third extension segment 521. In this way, an overall bulge height of the second tab 500 can be reduced, thereby increasing overall energy density of the battery cell 1. In some embodiments, the fourth part 5222 extends in a direction perpendicular to the first direction X. In this way, the fourth part 5222 can be parallel to an end portion of the electrode assembly 200, to facilitate overall packaging of the battery cell 1. From the first end portion 5211 of the third extension segment 521 to an end of the fourth extension segment 522 extending away from the third extension segment 521, a plane determined based on an extension track of the second extension portion 520 is perpendicular to the second flat portion. That is, the fourth part 5222 extends along the second direction Y. That is, the second tab 500 and the first tab 300 are arranged in parallel.

In some embodiments, the second tab 500 includes a plurality of third tab units 530. FIG. 7 is a schematic cross-sectional view of the plurality of third tab units 530. Further referring to other figures, the plurality of third tab units 530 are located at a same side of the electrode assembly 200. In some embodiment, along the first direction X, each of the plurality of third tab units 530 is located at an upper end of the electrode assembly 200 shown in the figure. Each of the plurality of third tab units 530 is corresponding to one of the plurality of third flat portions 221, an end of each of the plurality of third tab units 530 is connected to the corresponding one of the plurality of third flat portions 221, and an other end of each of the plurality of third tab units 530 extends away from the second electrode plate 220; and ends of the plurality of the third tab units 530 extending away from the second electrode plate 220 are stacked and fastened. In some embodiments, each of the plurality of third tab units 530 includes a third connection plate 531 and a third extension plate 532 that are integrally formed and mutually connected. The third connection plate 531 is L-shaped, a part of the third connection plate 531 is connected to one of the plurality of third flat portions 221, and another part is bent relative to the part, and gradually approaches the electrode assembly 200. Ends of all the third connection plates 531 extending away from the electrode assembly 200 converge. The third extension plate 532 is U-shaped and includes a third region segment 5321 and a fourth region segment 5322. An end of the third region segment 5321 is connected to an end of the third connection plate extending away from the third flat portion 221, and an other end of the third region segment 5321 extends away from the third connection plate 531, and gradually approaches the electrode assembly 200. An end of the fourth region segment 5322 is connected to the third region segment 5321, and an other end of the fourth region segment 5322 is bent in a direction leaving the electrode assembly 200; and an extension direction of the third region segment 5321 and an extension direction of the fourth region segment 5322 are opposite along an extension path of the third tab unit 530. For example, the third region segment 5321 extends toward the right side in FIG. 7, and the fourth region segment 5322 extends away from the electrode assembly 200 and toward the left side in FIG. 7. All the third extension plates 532 are stacked and fastened. The second connection portion 510 includes the third connection plates 531, and the second extension portion 520 includes all the third extension plates 532 stacked.

In some embodiments, the plurality of third tab units 530 and the plurality of third flat portions 221 are integrally formed. In some embodiments, each of the plurality of third tab units 530 extends outward from a current collector of one of the plurality of third flat portions 221, and is die-cut integrated by a device when the current collector is being made.

In some embodiments, because the second extension portion 520 is in a free floating state, the electrode assembly 200 with the second tab 500 connected may not fit into the housing 100. To improve such shortcoming, the battery cell 1 further includes a fourth tab unit 540. In some embodiments, similar to the second tab unit 340, the fourth tab unit 540 includes a fourth connection plate 541 and a fourth extension plate (not shown in the figure) connected to the fourth connection plate 541. An end of the fourth connection plate 541 is connected to the fourth flat portion 223, and an other end of the fourth connection plate 541 extends toward the third part 5221. The fourth extension plate and the third extension plate 532 are stacked and fastened; and an end of the fourth extension plate is located at the third part 5221 and is connected to an end of the fourth connection plate 541 extending away from the plurality of second flat portions 213. The second connection portion 510 includes the third connection plates 531, and the second extension portion 520 includes all the third extension plates 532 and second extension plate that are stacked. In this case, the fourth connection plate 541 can form a structure for supporting the second extension portion 520 to limit free movement of the second extension portion 520. In some embodiments, the fourth connection plate 541 is connected to the outermost fourth flat portion 223, that is, the one of the plurality of fourth flat portions 223 farthest from the third flat portion 221. Considering that internal resistance can be well reduced by separately connecting the second tab 500 to the plurality of third flat portions 221, only one fourth tab unit 540 is provided. In addition, arranging the fourth tab unit 540 on the outermost side helps to hinder the third extension segment 521 from protruding from the fourth connection plate 541, thereby hindering the second extension portion 520 from being partially hung in the air.

For the second adapting tab 600, refer to FIG. 6 and other figures. An end of the second adapting tab 600 is connected to the second extension portion 520, and an other end of the second adapting tab 600 extends out of the housing 100. In some embodiments, the second adapting tab 600 is L-shaped and includes a second fastening portion 610 and a second bent portion 620 connected to the second fastening portion 610. The second fastening portion 610 is provided on a side of the fourth part 5222 facing the electrode assembly 200. The second fastening portion 610 and the fourth part 5222 are welded, and a welding mark is formed at a welding position. The second bent portion 620 is bent relative to the second fastening portion 610, and an end of the second bent portion 620 extending away from the second fastening portion 610 extends out of the housing 100 to be electrically connected to an external electric component.

In some embodiments, to hinder the welding mark formed by the second tab 500 and the second adapting tab 600 from piercing the housing 100, the battery cell 1 further includes a second protective film layer 590. In some embodiments, referring to FIG. 2 and FIG. 6, a part of the second protective film layer 590 is fastened to the electrode assembly 200, another part is fastened to the second tab 500, and the second protective film layer 590 covers at least a part of the welding mark. In some embodiments, the second protective film layer 590 is adhesive tape. It may be understood that in another embodiment of this application, the second protective film layer 590 may alternatively be any other structure with an insulation property, such as plastic or rubber. Details are listed one by one herein. In some embodiments, to fully cover the welding mark of the second tab 500 and the second adapting tab 600, the second tab 500 is corresponding to two second protective film layers 590. In some embodiments, the two second protective film layers 590 are respectively connected to two opposite surfaces of the electrode assembly 200 along the second direction Y, and parts of the two second protective film layers 590 fastened to the second tab 500 jointly cover the welding mark.

It should be understood that in this embodiment, similar to the first tab 300, the second tab 500 is also a tab with a plurality of tab units, and extends out of the housing 100 through the second adapting tab 600, but this application is not limited thereto. In another embodiment of this application, the second tab 500 may alternatively be a common straight tab, an end of the second tab 500 is connected to the second electrode plate 220, and an other end of the second tab 500 extends straight out of the housing 100.

The battery cell 1 provided in this embodiment of this application includes a housing 100, an electrode assembly 200, and a first tab 300. The first tab 300 includes a first connection portion 310 and a first extension portion 320 that are sequentially connected. The first connection portion 310 is connected to at least two of the plurality of first flat portions 211. The first extension portion 320 includes a first extension segment 321 and a second extension segment 322 that are sequentially connected. The first extension segment 321 is arranged obliquely relative to an end portion of the electrode assembly 200, a first end 3211 of the first extension segment 321 is connected to the first connection portion 310, and the first extension segment 321 gradually approaches the electrode assembly 200 from the first end 3211 to a second end 3212 of the first extension segment 321. The second extension segment 322 is located on a side of the first extension segment 321 extending away from the electrode assembly 200. An end of the second extension segment 322 extending away from the first extension segment 321 extends in a direction approaching the first connection portion 310.

Compared with an existing battery cell on the market, in the battery cell 1 provided in the embodiments of this application, the first tab 300 and at least two of the plurality of first flat portions 211 located at a same side of the in-cell space 201 of the electrode assembly are separately connected and converge through the first connection portion 310. The end of the first extension segment 321 of the first extension portion 320 extending away from the first connection portion 310 is set tilted to a direction approaching the electrode assembly 200, and space between the second flat portion 213 and the housing 100 in the first direction X allows the first extension segment 321 to tilt, thereby effectively reducing the bulge height of the first extension portion 320, and reducing the overall occupied volume of the battery cell 1. That is, in the condition of equal battery cell capacity, the battery cell 1 provided in the embodiments of this application occupies a smaller volume in the foregoing method, thereby optimizing a current case that an occupied volume of the battery cell is relatively large, and improving the energy density of the battery cell. In the condition of equal battery cell volume, the battery cell 1 provided in the embodiments of this application allows for a larger electrode assembly 200 by utilizing the space saved in the foregoing method, thereby implementing greater battery cell capacity and improving the energy density of the battery cell.

Based on the same inventive concept, this application further provides an electric apparatus. FIG. 8 is a schematic diagram of an electric apparatus 2 according to an embodiment of this application. The electric apparatus 2 includes the battery cell 1 in the foregoing embodiments. In this embodiment, the electric apparatus 2 is a mobile phone. It may be understood that in another embodiment of this application, the electric apparatus 2 may alternatively be another electric-driven electric apparatus, such as a tablet computer, a computer, or an unmanned aerial vehicle.

In conclusion, it should be noted that the embodiments are merely intended for describing the technical solutions of this application, but not for limiting this application. Based on the idea of this application, the technical features in the embodiments or different embodiments can also be combined, the steps can be implemented in any sequence, and there are many other changes in different aspects of the application described above. For brevity, the details are omitted. Although this application is described in detail with reference to the embodiments, persons of ordinary skills in the art should understand that they may still make modifications to the technical solutions described in the embodiments or make equivalent replacements to some technical features thereof, without departing from the scope of the technical solutions of the embodiments of this application.

## Claims

1. A battery cell (1), comprising: an electrode assembly (200) and a first tab (300); **characterized in that**, the electrode assembly (200) is wound to form an in-cell space (201) at the center; the electrode assembly (200) comprises a first electrode plate (210), a second electrode plate (220) and a separator (230); the first electrode plate (210) and the second electrode plate (220) are spaced apart, and the separator (230) is arranged between the first electrode plate (210) and the second electrode plate (220);
the first electrode plate (210) is wound to form a plurality of first flat portions (211) extending straight; and along a direction perpendicular to the plurality of first flat portions (211), the plurality of first flat portions (211) are located at a same side of the in-cell space (201) surrounded by the electrode assembly (200);
the first tab (300) comprises a first connection portion (310) and a first extension portion (320) connected to the first connection portion (310);
the first connection portion (310) is connected to at least two of the plurality of first flat portions (211); and
the first extension portion (320) comprises a first extension segment (321), the first extension segment (321) is arranged obliquely relative to an end face of the electrode assembly (200), a first end (3211) of the first extension segment (320) is connected to the first connection portion (310), and the first extension segment (321) gradually approaches the electrode assembly (200) from the first end (3211) to a second end (3212) of the first extension segment (321).

2. The battery cell (1) according to claim 1, **characterized in that**, the first extension portion (320) further comprises a second extension segment (322); and
the second extension segment (322) is connected to the second end (3212) and is located on a side of the first extension segment (321) extending away from the electrode assembly (200), and an end of the second extension segment (322) extending away from the first extension segment (321) extends in a direction approaching the first connection portion (310).

3. The battery cell (1) according to claim 2, **characterized in that**, the second extension segment (322) comprises a first part (3221) and a second part (3222) connected to the first part (3221);
an end of the first part (3221) is connected to the first extension segment (321), and an other end of the first part (3221) extends in a direction facing away from the electrode assembly (200); and
an end of the second part (3222) is connected to the first part (3221), and an other end of the second part (3222) extends in a direction approaching the first connection portion (310).

4. The battery cell (1) according to claim 3, **characterized in that**, a distance between the first extension segment (321) and the second part (3222) gradually decreases from the second end (3212) to the first end (3211); and/or
the second part (3222) is perpendicular to an extension direction of the in-cell space (201).

5. The battery cell (1) according to claim 2, **characterized in that**, a plane determined based on an extension track of the first extension portion (321) is perpendicular to the first flat portion (211) from the first end (3211) to an end of the second extension segment (322) extending away from the first extension segment (321).

6. The battery cell (1) according to any one of claims 2 to 5, **characterized in that**, the first tab (300) comprises a plurality of first tab units (330), each of the plurality of first tab units (330) is corresponding to one of the plurality of first flat portions (211), and each of the plurality of first tab units (330) comprises:
a first connection plate (331), wherein an end of each of the first connection plates (331) is connected to one of the plurality of first flat portions (211), and other ends of all the first connection plates (331) converge; and
a first extension plate (332), connected to an end of the first connection plate (331) extending away from the plurality of first flat portions (211), wherein all the first extension plates (332) are stacked; and
the first connection portion (310) comprises all the first connection plates (331), and the first extension portion (320) comprises all the first extension plates (332) stacked.

7. The battery cell (1) according to claim 6, **characterized in that**, the first electrode plate (210) is wound to form the plurality of first flat portions (211) extending straight and a plurality of second flat portions (213) extending straight; and along the direction perpendicular to the plurality of first flat portions (211), the plurality of second flat portions (213) are located on one side of the in-cell space (201) and the plurality of first flat portions (211) are located on an other side of the in-cell space (201); and
the first tab (300) further comprises a second tab unit (340), and the second tab unit (340) comprises:
a second connection plate (341), wherein an end of the second connection plate (341) is connected to one of the plurality of second flat portions (213); and
a second extension plate connected to an end of the second connection plate (341) extending away from the plurality of second flat portions (213), wherein the second extension plate and the first extension plate (332) are stacked; and
the first connection portion (310) comprises all the first connection plates (331), and the first extension portion (320) comprises all the first extension plates (332) and the second extension plate stacked.

8. The battery cell (1) according to claim 7, **characterized in that**, the second connection plate (341) is connected to an outermost second flat portion (213).

9. The battery cell (1) according to claim 8, **characterized in that**, the first tab unit (330) and the first flat portion (211) are integrally formed; and/or
the second tab unit (340) and one of the plurality of second flat portions (213) are integrally formed.

10. The battery cell (1) according to any one of claims 1 to 5, **characterized in that**, the battery cell (1) further comprising:
a housing (100), wherein the electrode assembly (200) and the first tab (300) are both accommodated in the housing (100); and
a first adapting tab (400), wherein an end of the first adapting tab (400) is connected to the first extension portion (320), and an other end of the first adapting tab (400) extends out of the housing (100).

11. The battery cell (1) according to claim 10, **characterized in that**, the first adapting tab (400) comprises a first fastening portion (410) and a first bent portion (420) connected to the first fastening portion (410);
the first fastening portion (410) is welded to a side of the second extension segment (322) facing toward the electrode assembly (200) to form a welding mark; and
the first bent portion (420) is bent relative to the first fastening portion (410) and partially extends out of the housing (100).

12. The battery cell (1) according to claim 11, **characterized in that**, the battery cell (1) further comprising a first protective film layer (390); and
a part of the first protective film layer (390) is fastened to the electrode assembly (200), another part of the first protective film layer (390) is fastened to the first tab (300), and the first protective film layer (390) covers at least a part of the welding mark.

13. The battery cell (1) according to any one of claims 1 to 5, **characterized in that**, the second electrode plate (220) is wound to form a plurality of third flat portions (221) extending straight, the plurality of third flat portions (221) and the plurality of first flat portions (211) are both located at a same side of the in-cell space (201) and arranged alternately along a direction perpendicular to the plurality of first flat portions (211), the battery cell (1) further comprises a second tab (500), and the second tab (500) comprises a second connection portion (510) and a second extension portion (520) connected to the second connection portion (510);
the second connection portion (510) is connected to at least two of the plurality of third flat portions (221);
the second extension portion (520) comprises a third extension segment (521), the third extension segment (521) is arranged obliquely relative to an end face of the electrode assembly (200), a first end portion (5211) of the third extension segment (521) is connected to the second connection portion (520), and the third extension segment (521) gradually approaches the electrode assembly (200) from the first end portion (5211) to a second end portion (5212) of the third extension segment (521); and
the second extension portion (520) further comprises a fourth extension segment (522), the fourth extension segment (522) is connected to the second end portion (5212) and is located on a side of the third extension segment (521) extending away from the electrode assembly (200), and an end of the fourth extension segment (522) extending away from the third extension segment (521) extends in a direction approaching the second connection portion (510).

14. The battery cell (1) according to claim 13, **characterized in that**, the second tab (500) and the first tab (300) are arranged in parallel.

15. An electric apparatus (2), **characterized in that**, the electric apparatus comprising the battery cell (1) according to any one of claims 1 to 14.
